# EUROPÄISCHE PATENTSCHRIFT

(11) **EP 0 683 009 B1**
(45) Veröffentlichungstag und Bekanntmachung des Hinweises auf die Patenterteilung: **09.06.1999**
(21) Anmeldenummer: 95102182.3
(22) Anmeldetag: 16.02.1995
(51) Int. Cl.: B23Q 1/25, B23Q 3/00, B27C 5/06, B23Q 35/10, B23Q 3/06

(54) **Führungsvorrichtung für Fräsmaschinen**
Guiding device for milling machines
Dispositif de guidage pour machines à meuler

(30) Priorität: 18.05.1994 DE 4417376
(43) Veröffentlichungstag der Anmeldung: 22.11.1995
(73) Patentinhaber: SCHWEIZERISCHE UNFALLVERSICHERUNGSANSTALT SUVA, CH-6001 Luzern (CH)
(72) Erfinder: Leupi, Hans, CH-6253 Uffikon (CH); Wirz, Hansjürg, CH-6023 Rothenburg (CH)
(74) Vertreter: Gustorf, Gerhard, Dipl.-Ing.

(56) Entgegenhaltungen:
- CH-A- 307 536
- DE-C- 4 305 356
- FR-A- 976 303
- FR-A- 2 607 052
- FR-A- 2 651 704
- GB-A- 942 268
- GB-A- 2 165 171
- US-A- 2 085 235
- US-A- 3 572 680
- US-A- 4 445 553
- US-A- 4 749 013

## Beschreibung

Die Erfindung betrifft eine Vorrichtung für geführtes Fräsen von Werkstücken an Tischfräsmaschinen nach dem Oberbegriff des Patentanspruchs 1, die aus der US-A-4 445 553 bekannt ist.

Zum Fräsen verhältnismäßig kurzer Werkstücke und insbesondere zum Einsetzfräsen ist es bereits bekannt, Spannladen zu verwenden, in die das Werkstück eingespannt wird. Dieses wird dann mit Hilfe der Spannlade von Hand gegen den Anschlag der Fräsmaschine bewegt, so daß dann der Fräsvorgang durchgeführt werden kann. Zum Fräsen längerer, leistenförmiger Werkstücke sind bisher keine derartigen Hilfsvorrichtungen bekannt, so daß die Werkstücke im allgemeinen von Hand am Anschlag vorgeschoben werden. Um hierbei den erforderlichen Druck in Richtung auf das Fräswerkzeug auszuüben und einen gewissen Schutz zu gewährleisten, werden bei derartigen Arbeitsvorgängen sogenannte Kehlschutzapparate oder Schutz- und Druckvorrichtungen angebaut.

Aus der US-A 4 445 553 ist eine Vorrichtung der eingangs umrissenen Bauart bekannt, die fest auf einem Maschinentisch einer Fräsmaschine angebracht ist. Sowohl ein das Werkstück aufnehmender Aufspanntisch als auch eine rechtwinklig dazu verfahrbare Läuferplatte sind über Verschiebelager auf Führungsstangen gelagert, wobei die Führungsstangen der beiden Querführungen unmittelbar auf dem Maschinentisch befestigt sind. Diese Vorrichtung eignet sich nicht dafür, bei Bedarf auf dem Maschinentisch einer Fräsmaschine fixiert zu werden. Aufgrund der erläuterten Konstruktion baut die bekannte Vorrichtung sehr hoch und erlaubt Verschiebebewegungen in x- und y-Richtung nur in sehr engen Grenzen. Wesentlich ist schließlich, daß Arbeiten zwischen dem Anschlag und dem Kreuztisch nicht möglich sind, etwa zum Bearbeiten langer Werkstücke, die durchgeschoben werden sollen.

Die US-A 4 749 013 zeigt und beschreibt eine ähnliche Vorrichtung mit Kreuztisch für eine Horizontalbohrmaschine. Auch diese Vorrichtung ist sehr hoch und fest auf dem Maschinentisch der Bohrmaschine angebracht.

Gegenstand der US-A 3 572 680 ist ein Kreuztisch, der auf einer Werkzeugmaschine angebracht werden kann, der aber aufgrund seiner besonderen Konstruktion ebenfalls einen großen Platzbedarf in der Höhe hat. Die Längs- und Querführungen sind auch hier fest und in ihrer Länge begrenzt, so daß die Verschiebebewegungen entsprechend eingeschränkt sind.

Der Erfindung liegt die Aufgabe zugrunde, eine Vorrichtung für geführtes Fräsen von Werkstücken zur Verfügung zu stellen, die für die meisten der vorkommenden Fräsarbeiten universell eingesetzt werden kann und zusätzlich zu einer exakten Führung des Werkstücks eine größtmögliche Sicherheit für die Bedienungsperson gewährleistet und die bei kleinstem Bauraum sowohl in vertikaler als auch in horizontaler Richtung rasch und mühelos an vorhandene Fräsmaschinen angebracht werden kann.

Bei einer Vorrichtung der eingangs umrissenen Bauart wird diese Aufgabe erfindungsgemäß durch die Merkmale im kennzeichnenden Teil des Patentanspruchs 1 gelöst.

Mit Hilfe einer derartigen Vorrichtung lassen sich kurze und auch lange Werkstücke am Anschlag fräsen, ohne daß die Bedienungsperson das Werkstück selbst führen oder vorschieben müßte. Durch die universelle Beweglichkeit des Aufspanntisches in allen horizontalen Richtungen sind auch Einsetzfräsarbeiten und Formfräsarbeiten möglich. Die teleskopierbaren Führungen erlauben eine sehr niedrige Bauhöhe und gewährleisten trotz geringer Breite der Vorrichtung sehr weite Ausfahrwege in x- und y-Richtung.

In, der dem Fräswerkzeug zugewandten Längsseite des Aufspanntisches ist ein in Richtung auf das Fräswerkzeug federbelasteter Druckschuh gelagert. Mit Hilfe dieses Druckschuhs wird beim Fräsen am Anschlag ein leistenförmiges Werkstück sicher gegen den Anschlag gedrückt und dort geführt.

Ferner ist es günstig, wenn die dem Fräswerkzeug zugewandte Längsseite des Aufspanntisches am zuführseitigen Ende einen über die Längsseite ausrückbaren und gegen eine Federkraft einrückbaren Mitnahmenocken aufweist. Dieser erfaßt in seiner ausgerückten Stellung das Ende einer zu fräsenden Leiste o. dgl. und schiebt diese bei der ausgelösten Längsbewegung des Aufspanntisches vor dem Fräswerkzeug vorbei; nach dem Fräsvorgang und der Rückführbewegung des Aufspanntisches in die Ausgangsposition erfaßt der Mitnahmenocken das nächste Werkstück, wenn dessen Ende den Mitnahmenocken überfahren hat, so daß er durch die Federkraft in seine Mitnahmestellung ausgerückt ist.

Der Aufspanntisch, der auf der Läuferplatte verriegelt werden kann, weist auf seiner vom Fräswerkzeug abgewandten Seite einen Handgriff auf, mit dem er in die jeweils gewünschte Richtung verfahren werden kann. Dabei ist es günstig, wenn im Bereich des Handgriffes ein Betätigungshebel für die Entriegelung des Aufspanntisches von der Läuferplatte angebracht ist, was eine ergonomisch günstige Bedienung sichert.

Nach einer bevorzugten Weiterbildung der Erfindung kann an der von Fräswerkzeug abgewandten Längskante des Aufspanntisches eine Frässchablone angebracht werden, die an einer Tastrolle anliegt, die verstellbar am Maschinentisch befestigt werden kann. Das auf dem Aufspanntisch gehaltene Werkstück erhält dann bei der Vorschubbewegung vor dem Fräswerkzeug eine genau reproduzierbare Form, so daß Serienteile schnell und wirtschaftlich gefräst werden können.

Nach einem anderen Merkmal der Erfindung ist zwischen dem Aufspanntisch und der Läuferplatte eine Rückzugeinrichtung angebracht, die bestrebt ist, den Aufspanntisch immer vom Fräswerkzeug wegzuziehen. Auf diese Weise wird nach Abschluß des Fräsvorgangs der Aufspanntisch automatisch aus dem Fräsbereich herausgerückt.

Auf dem Aufspanntisch kann eine Positionierplatte für das zu bearbeitende Werkstück in beliebiger Winkellage fixiert werden. Ferner können auf dem Aufspanntisch Klemmorgane zum Festklemmen des Werkstücks oder auch eine Schrittdrehvorrichtung zum Formfräsen angebracht werden.

Weitere Merkmale und Vorteile der Erfindung ergeben sich aus den Patentansprüchen und aus der folgenden Beschreibung von Ausführungsbeispielen, die in der Zeichnung dargestellt sind. Es zeigen:
Figur 1 die Draufsicht einer Führungsvorrichtung für eine Tischfräsmaschine gemäß der Erfindung,
Figur 2 eine Vorderansicht der Führungsvorrichtung,
Figur 3 eine Seitenansicht der Führungsvorrichtung,
Figur 4 eine vergrößerte Darstellung der Ansicht gemäß Figur 1,
Figur 5 eine der Figur 2 entsprechende, vergrößerte Vorderansicht,
Figur 6 eine der Figur 3 entsprechende, vergrößerte Seitenansicht,
Figur 7 in vergrößertem Maßstab eine Schnittdarstellung in der Ebene VII - VII der Figur 1 zur Darstellung des Mitnahmenockens,
Figur 8 in ebenfalls vergrößertem Maßstab einen Querschnitt durch den Druckschuh in der Ebene VIII - VIII der Figur 1,
Figur 9 in vergrößertem Maßstab einen Schnitt in der Ebene IX - IX der Figur 1 zur Darstellung der Rückzugeinrichtung,
Figur 10 eine Draufsicht der Rückzugeinrichtung der Figur 9,
Figur 11 eine teilweise geschnittene Draufsicht des Systems zum Verriegeln des Aufspanntisches auf der Läuferplatte im Bereich XI der Figur 1,
Figur 12 eine Variante der Figur 11,
Figur 13 eine vergrößerte Draufsicht des Systems zum Verriegeln der Läuferplatte auf der Grundplatte im Bereich XIII der Figur 1,
Figur 14 eine Seitenansicht der Figur 13,
Figur 15 eine Variante der Figur 13,
Figur 16 die Draufsicht der Führungsvorrichtung mit angebauter Schablone,
Figur 17 eine vergrößerte Schnittdarstellung in der Ebene XVII - XVII der Figur 16,
Figur 18 die Draufsicht auf die Führungsvorrichtung gemäß der Erfindung mit auf dem Aufspanntisch festgeklemmtem Werkstück,
Figur 19 eine vergrößerte Seitenansicht in Richtung des Pfeiles XIX der Figur 18,
Figur 20 eine der Figur 18 entsprechende Draufsicht mit einem aufgespannten, längeren Werkstück,
Figur 21 eine Schnittdarstellung in der Ebene XXI - XXI der Figur 20,
Figur 22 die Draufsicht der Aufspannplatte mit aufgespannten Werkstücken, die an ihrer Stirnseite zu bearbeiten sind,
Figur 23 die vergrößerte Ansicht in der Richtung des Pfeiles XXIII der Figur 22,
Figur 24 die Draufsicht der Aufspannplatte mit schräg aufgespanntem Werkstück,
Figur 25 die Draufsicht einer Variante der Figur 24, bei der die Positionierplatte winkelverstellbar auf einem Gehrungshalter gelagert ist,
Figur 26 eine Ansicht in Richtung des Pfeiles XXVI der Figur 25,
Figur 27 die Draufsicht einer abgewandelten Ausführungsform der Figur 20 zum Festklemmen eines Werkstücks auf dem Aufspanntisch,
Figur 28 die Seitenansicht der Klemmvorrichtung in Richtung des Pfeiles XXVIII der Figur 27 in Vorspannstellung,
Figur 29 eine der Figur 28 entsprechende Ansicht in der Klemmstellung,
Figur 30 eine vergrößerte, den Figuren 28 und 29 entsprechende Teilansicht mit daran angebrachter Andruckleiste,

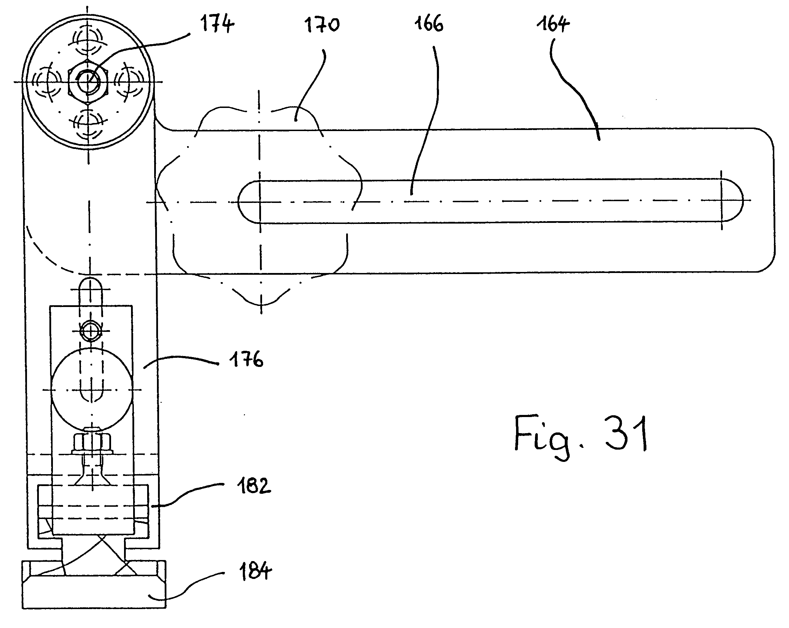

Figur 31 eine Stirnansicht der Andruckleiste mit horizontalem Tragarm,
Figur 32 eine Draufsicht auf einen Teil der Andruckleiste der Figur 31 und
Figur 33 eine vergrößerte Darstellung des Bereiches XXXIII der Figur 32.

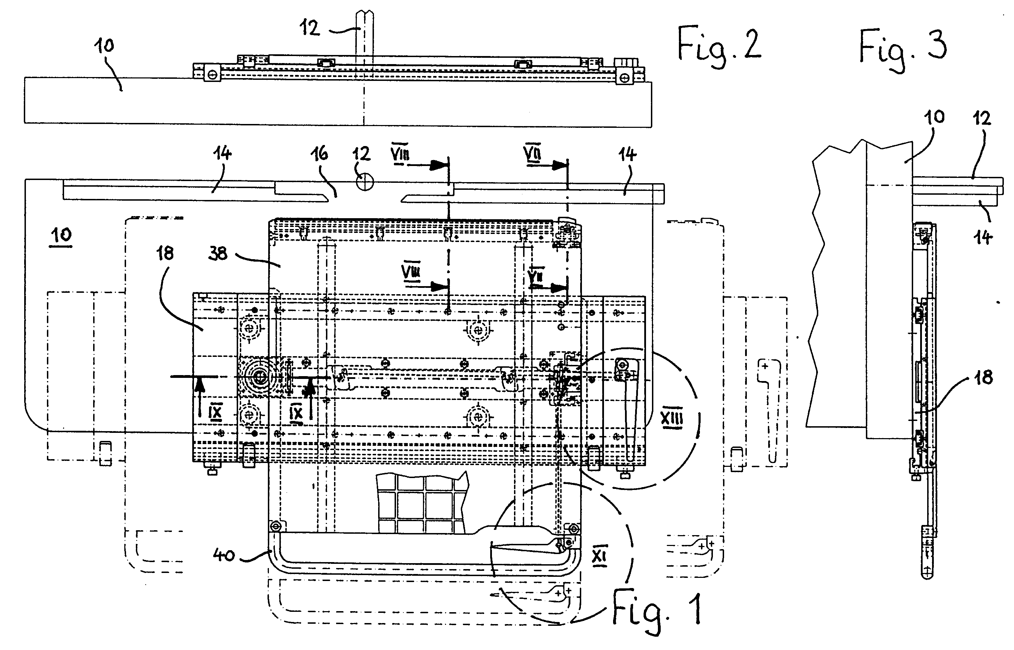

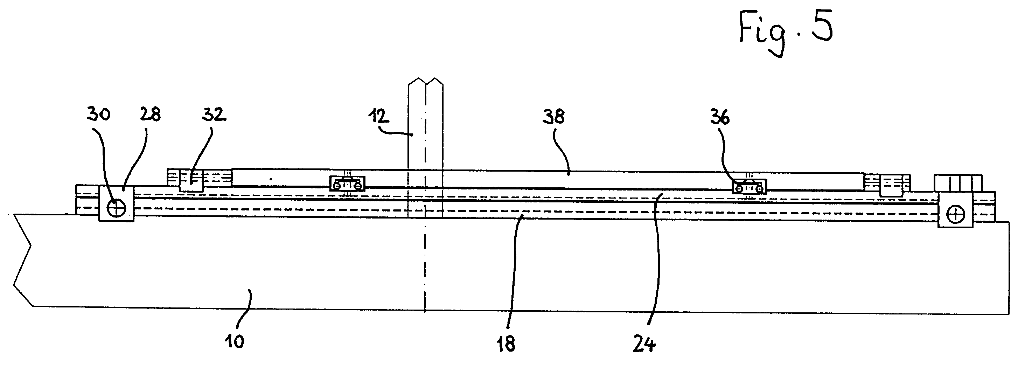

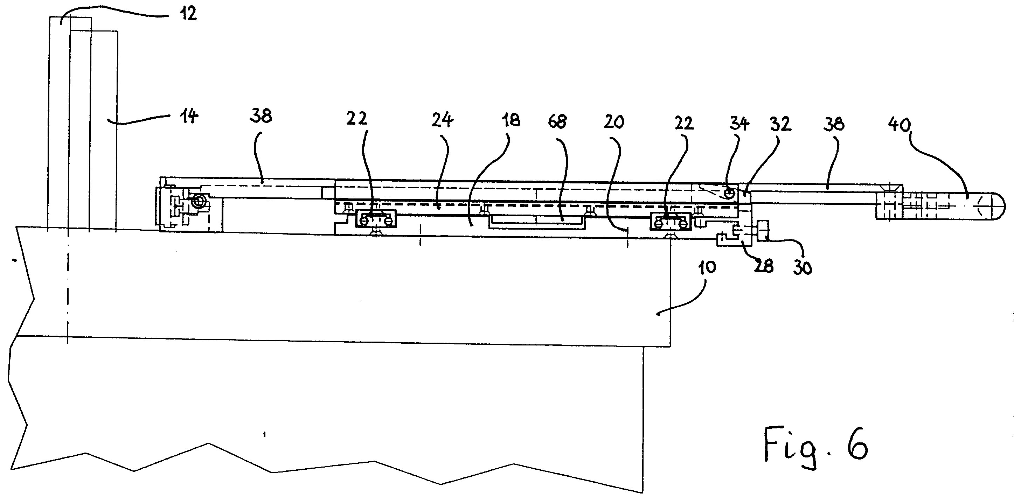

Insbesondere in den Figuren 1 bis 6 ist ein Maschinentisch 10 einer Tischfräsmaschine zu erkennen, deren nicht weiter dargestelltes Fräswerkzeug an einer Fräswelle 12 befestigt ist. Auf dem Maschinentisch 10 sind zwei Anschlagplatten 14 befestigt, die zwischen sich eine Fräsöffnung 16 freilassen.

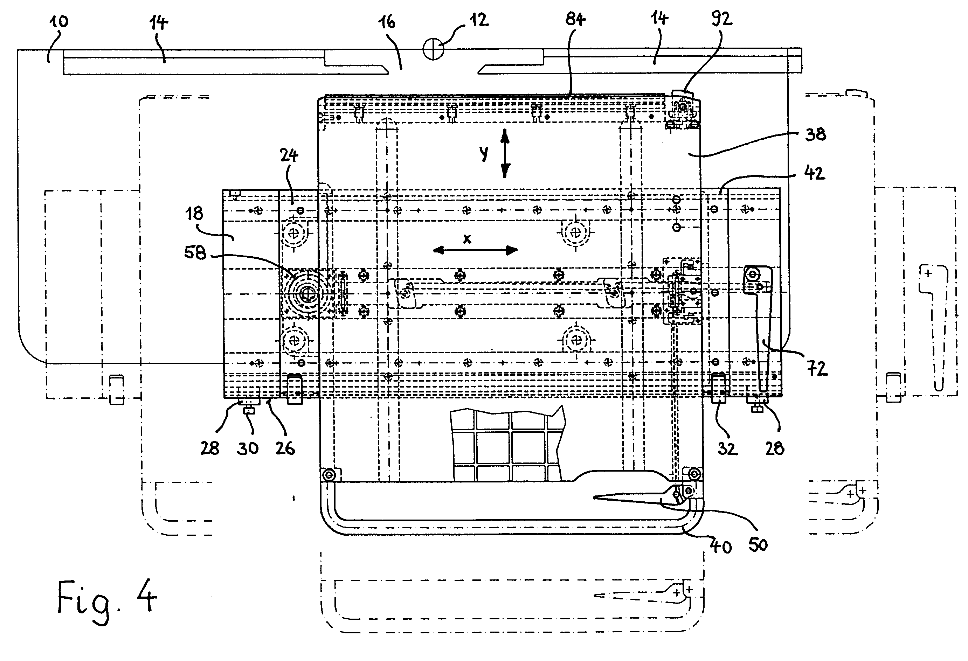

Auf dem Maschinentisch 10 ist eine Grundplatte 18 befestigt, beispielsweise mit Hilfe nicht weiter dargestellter Rändelschrauben 20, die ohne Werkzeug eingeschraubt und gelöst werden können. Auf der Grundplatte 18 ist über zwei zueinander parallele Längsführungen 22 eine Läuferplatte 24 gelagert, die parallel zu den Anschlagplatten 14 in der x-Richtung (Figur 4) verschoben werden kann. Für die Begrenzung des Verschiebeweges der Läuferplatte 24 auf der Grundplatte 18 sind an der von der Fräswelle 12 abgewandten Längskante 26 der Grundplatte 18 verstellbare Anschläge 28 angebracht, die durch jeweils eine Klemmschraube 30 fixiert werden können. Auf der Läuferplatte 24 sind entsprechende Gegenanschläge 32 befestigt, die um eine horizontale Achse 34 nach oben gekippt werden können, um sie aus dem Eingriffsbereich mit den Anschlägen 28 herauszuschwenken, so daß die Möglichkeit besteht, die Läuferplatte 24 über die Anschläge 28 hinaus zu verfahren.

Auf der Läuferplatte 24 ist über zwei zueinander parallel verlaufende Querführungen 36 ein Aufspanntisch 38 in y-Richtung verfahrbar gelagert. Auf seiner von der Fräswelle 12 abgewandten Seite hat der Aufspanntisch 10 einen Handgriff 40, der sich in Form eines Bügels über die gesamte Länge dieser Seite erstreckt.

Die Längsführungen 22 und die Querführungen 36 bestehen aus sehr flachen, ineinander eingreifenden Schienen, die über Kugeln teleskopisch gegeneinander verschoben werden können.

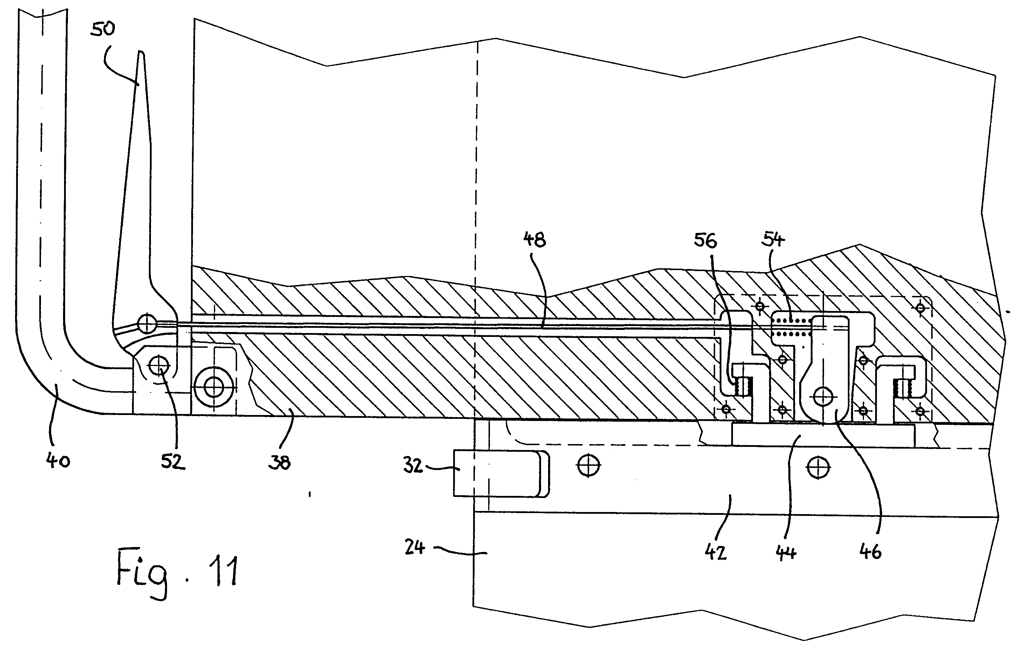

Der Aufspanntisch 38 kann auf der Läuferplatte 24 verriegelt werden, so daß er zusammen mit der Läuferplatte 24 nur in der x-Richtung yerschoben werden kann. Wie Figur 11 zeigt, ist hierzu auf der in Figur 4 rechten Seite der Läuferplatte 24 eine in y-Richtung verlaufende Bremsleiste 42 befestigt, gegen die ein Bremsschuh 44 zur Anlage kommt, wenn er durch einen exzentrischen Bremshebel 46 in Richtung auf die Bremsleiste 42 verschoben wird. Der Bremshebel 46 ist durch ein Zugseil 48 mit einem schwenkbaren Betätigungshebel 50 verbunden, der im Bereich des Handgriffes 40 um einen Zapfen 52 drehbar gelagert ist. In der nicht von Hand gezogenenen Stellung des Betätigungshebels 50 drückt eine Druckfeder 54 den Bremshebel 46 in die Klemmstellung, in der der Bremsschuh 44 an die Bremsleiste 42 gedrückt wird. Wenn der Betätigungshebel 50 gezogen wird, dann wird die Klemmstellung gelöst, da die beiden Druckfedern 56 den Bremsschuh 44 von der Bremsleiste 42 wegdrücken. Der Querweg (y-Richtung) ist also freigegeben, solange der Betätigungshebel 50 gezogen wird.

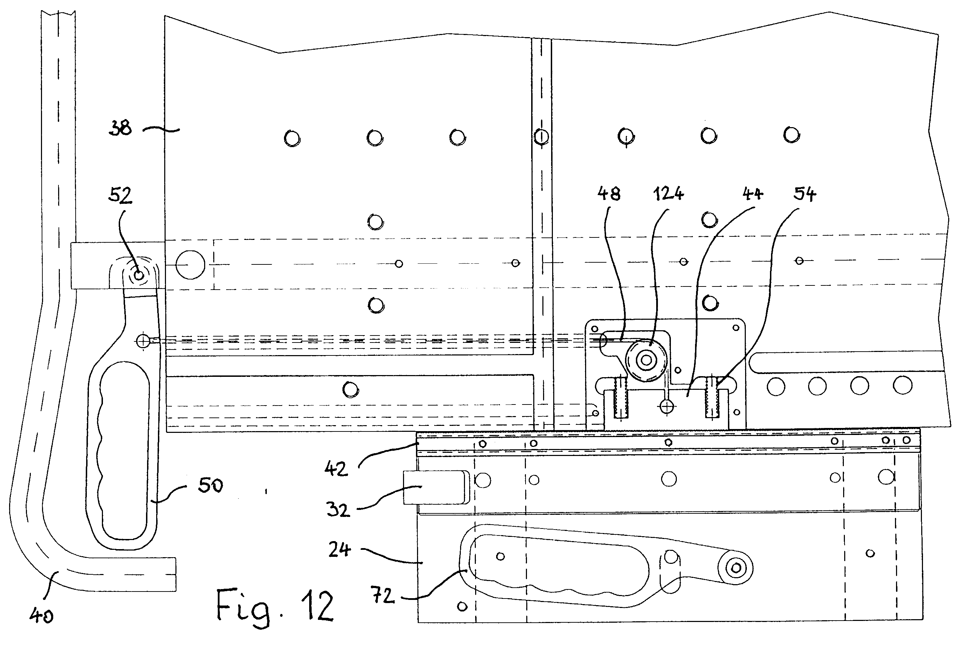

Bei der in Figur 12 dargestellten Variante der Figur 11 kommt der Bremsschuh 44 nicht kraftschlüssig, sondern formschlüssig mit der Bremsleiste 42 in Eingriff, da beide ein Zahnstangenprofil mit einer sehr geringen Teilung (ca. 1,5 mm) aufweisen. Das Zugseil 48 ist über eine Umlenkrolle 124 zu dem Bremsschuh 44 geführt, der hier über zwei Druckfedern 54 gegen die Bremsleiste 42 gedrückt wird.

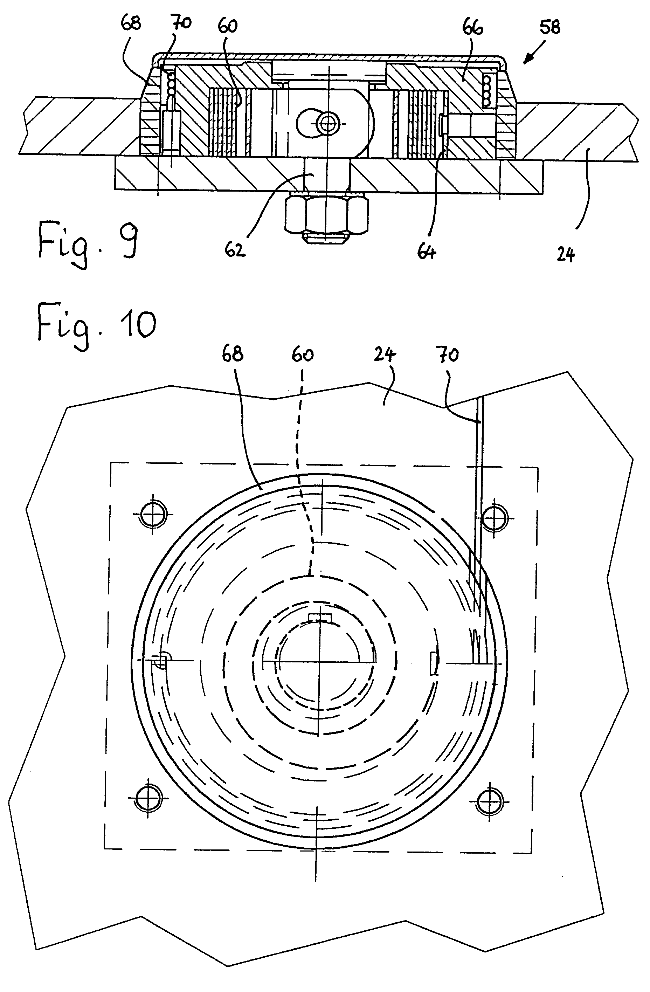

Zwischen dem Aufspanntisch und der Läuferplatte 24 ist eine Rückzugeinrichtung 58 angebracht (vgl. Figuren 4, 9 und 10), die dafür sorgt, daß bei gezogenem Betätigungshebel 50 und damit gelöstem Bremsschuh 44 auf den Aufspanntisch 38 eine diesen vom Fräser wegbewegende Rückzugskraft einwirkt. Im dargestellten Ausführungsbeispiel hat die Rückzugeinrichtung 58 eine Triebfeder 60 in Form einer Spiralfeder, deren inneres Ende an einem fest mit der Läuferplatte 24 verbundenen Bolzen 62 befestigt ist, während das äußere Ende 64 an der Innenwand einer Trommel 66 befestigt ist, die drehbar in einem zylindrischen Gehäuse 68 gelagert ist. Auf den Außenumfang der Trommel 66 ist ein Zugseil 70 gewickelt, dessen freies Ende am Aufspanntisch 38 angreift.

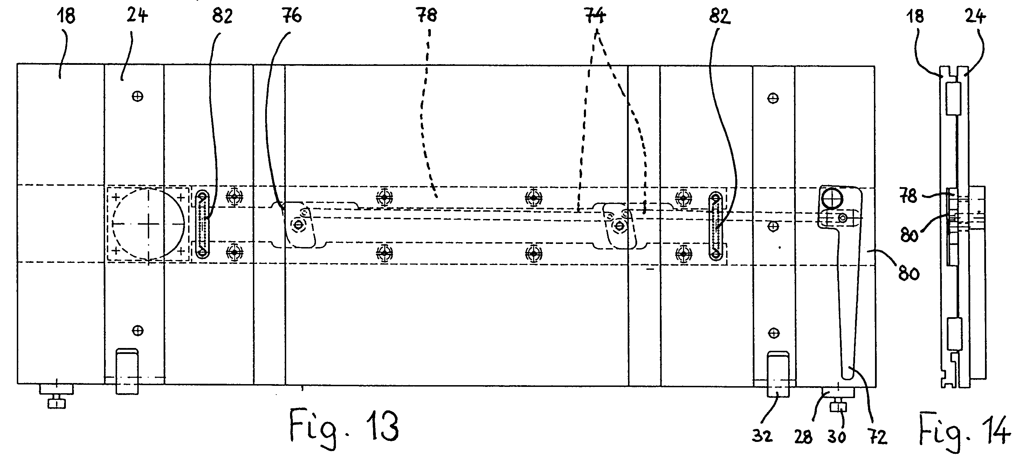

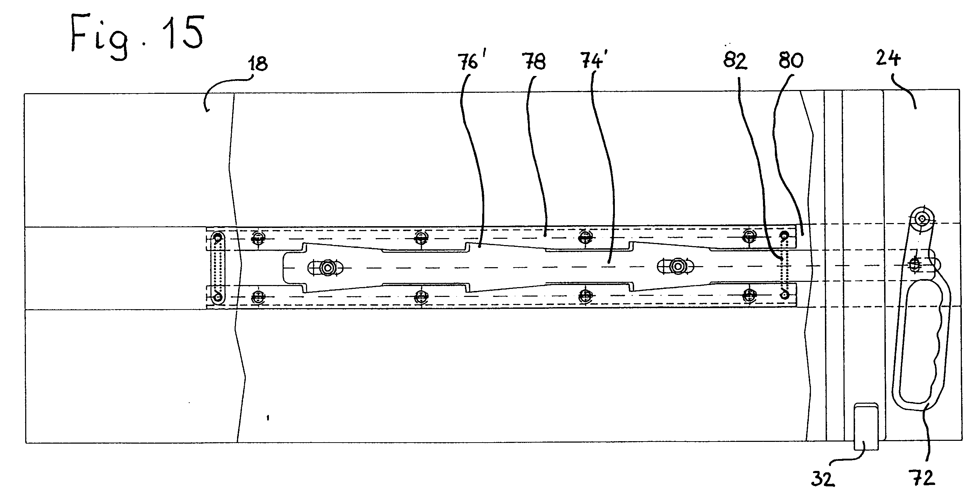

Die Läuferplatte 24 kann auf der Grundplatte 18 verriegelt werden, so daß nur noch eine Zuführbewegung in y-Richtung möglich ist. Zu diesem Zweck ist auf der in Figur 4 rechten Seite der Läuferplatte 24 ein Betätigungshebel 72 schwenkbar gelagert, an dem gemäß Figur 13 ein Zuggestänge 74 angreift. Dieses ist exzentrisch an zwei Schwenknocken 76 angelenkt, die an der Unterseite der Läuferplatte 24 angebracht sind. Wenn der Betätigungshebel 72 gemäß Figur 13 im Gegenuhrzeigersinn geschwenkt wird, drücken die beiden Schwenknocken 76 gegen zwei einander parallel gegenüberliegende und an der Läuferplatte 24 angebrachte Bremsleisten 78 (vgl. auch Figur 14), die dann in einer Längsnut 80 der Grundplatte 18 zur Anlage kommen und dadurch die Läuferplatte 24 auf der Grundplatte 18 festklemmen.

Wenn der Betätigungshebel 72 wieder losgelassen wird, ziehen zwei Zugfedern 82 die beiden Bremsleisten 78 wieder aus ihrer Eingriffsstellung in der Längsnut 80 in die Freigabestellung.

Bei der in Figur 15 gezeigten Variante ist das Zuggestänge 74 der Figur 13 durch eine am Betätigungshebel 72 angelenkte, tannenbaumförmige Stange 74' mit Keilvorsprüngen 76' ersetzt, die in keilförmige Ausnehmungen der beiden Bremsleisten 78 eingreifen. Wenn der Betätigungshebel 72 im Gegenuhrzeigersinn geschwenkt wird, zieht er die Stange 74' in Figur 15 nach rechts, so daß aufgrund der Keilwirkung die beiden Bremsleisten 78 in der Längsnut 80 in die Klemmstellung kommen.

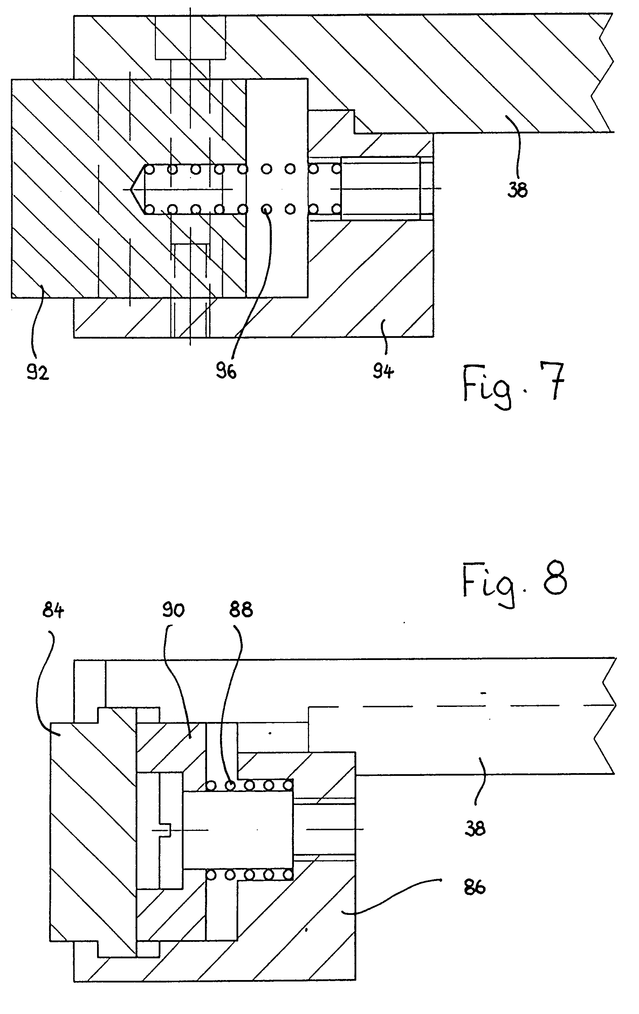

An der der Fräswelle 12 zugewandten Längsseite des Aufspanntisches 38 ist ein Druckschuh 84 gelagert, der sich nahezu über die ganze Längsseite des Aufspanntisches 38 erstreckt. Wie Figur 8 zeigt, ist der leistenförmige, aus Holz hergestellte Druckschuh 84 in einer Aufnahmeleiste 86 an der Unterseite des Aufspanntisches 38 untergebracht und wird dort über Druckfedern 88 und eine Führungsleiste 90 in Richtung auf die Fräswelle 12 gedrückt. Beim Fräsen langer, leistenförmiger Werkstücke übt er somit den nötigen Anpreßdruck in Richtung auf die Anschlagplatten 14 aus.

An dem in Figur 4 rechten Ende der der Fräswelle 12 zugeordneten Längsseite des Aufspanntisches 38 ist neben dem Druckschuh 84 ein Mitnahmenocken 92 angebracht, der gemäß Figur 7 ebenfalls in einem Aufnahmegehäuse 94 an der Unterseite des Aufspanntisches 38 untergebracht ist. Eine Druckfeder 96 ist bestrebt, den Mitnahmenocken 92 immer in seine äußere Mitnahmestellung zu drücken, in der er über den Druckschuh 84 hervorsteht und ein leistenförmiges Werkstück an den Anschlagplatten 14 entlang vorschiebt. Der Mitnahmenocken 92 kann durch nicht weiter dargestellte Mittel in seiner eingerückten Stellung arretiert werden.

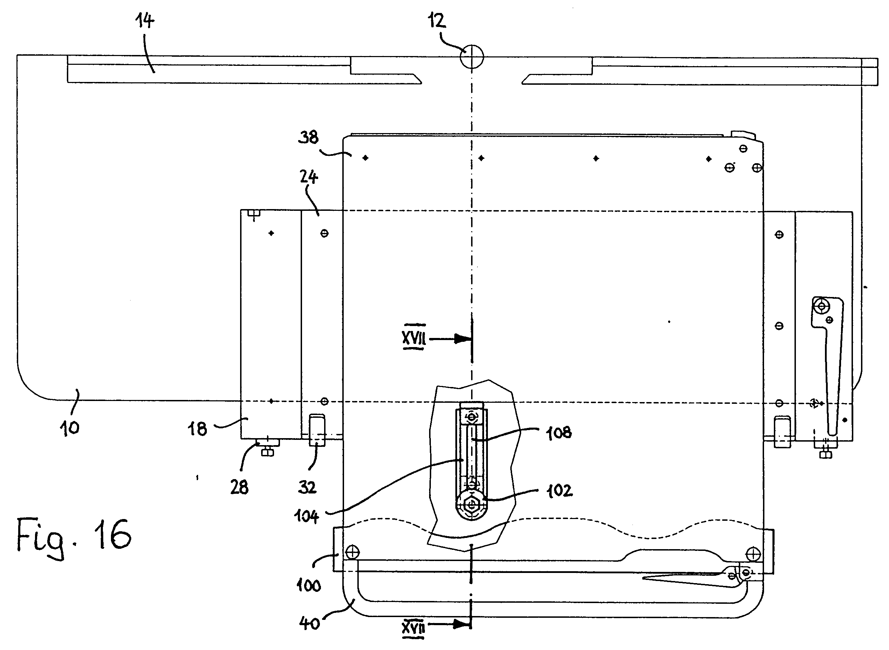

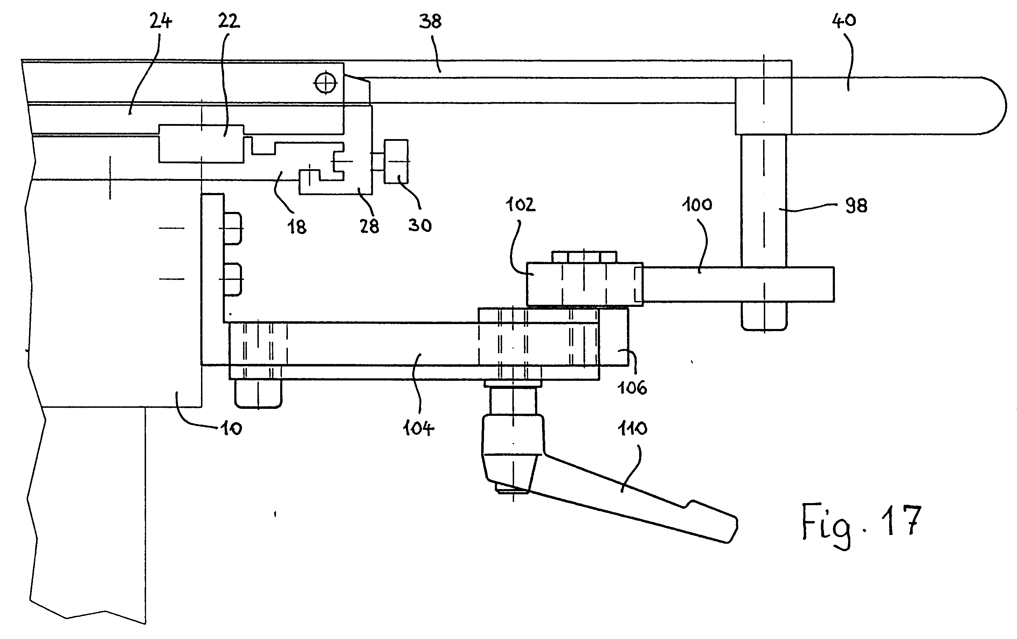

Die Figuren 16 und 17 zeigen, daß an der von der Fräswelle 12 abgewandten Längsseite des Aufspanntisches 38 eine nach unten ragende Befestigungsvorrichtung 98 für eine Schablone 100 angebracht werden kann, die sich parallel zum Aufspanntisch 38 in Richtung auf die Fräswelle 12 erstreckt. Die Formseite der Schablone 100 wird bei einer Bewegung des Aufspanntisches 38 in y-Richtung in Anlage mit einer Tastrolle 102 gehalten, welche auf einer am Maschinentisch 10 befestigten Konsole 104 mittels einer Lagerplatte 106 gelagert ist. Die Lagerplatte 106 kann in einem Langloch 108 der Konsole 104 verstellt und durch einen Klemmhebel 110 arretiert werden.

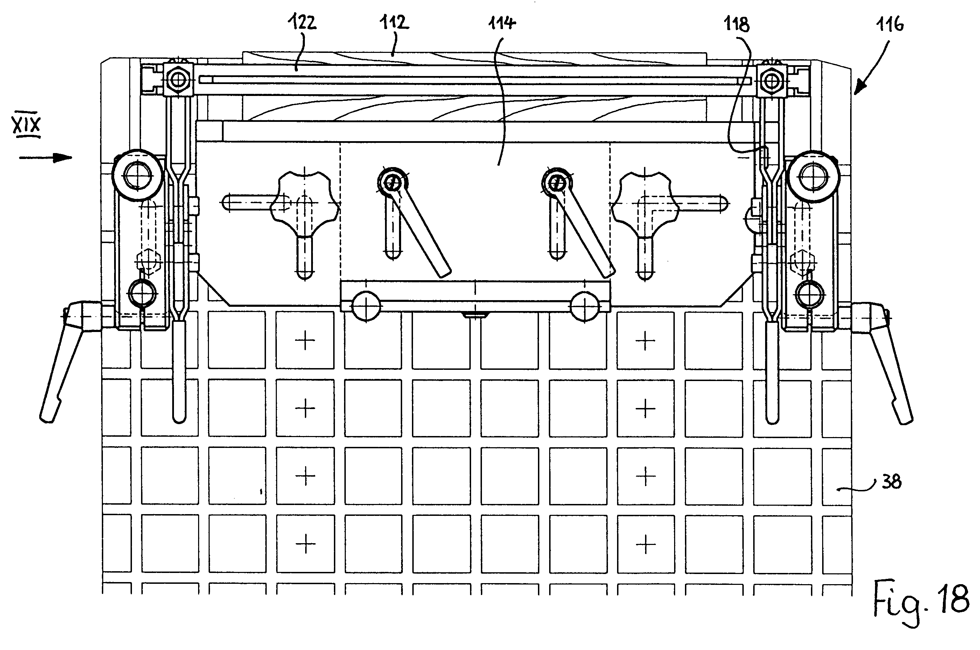

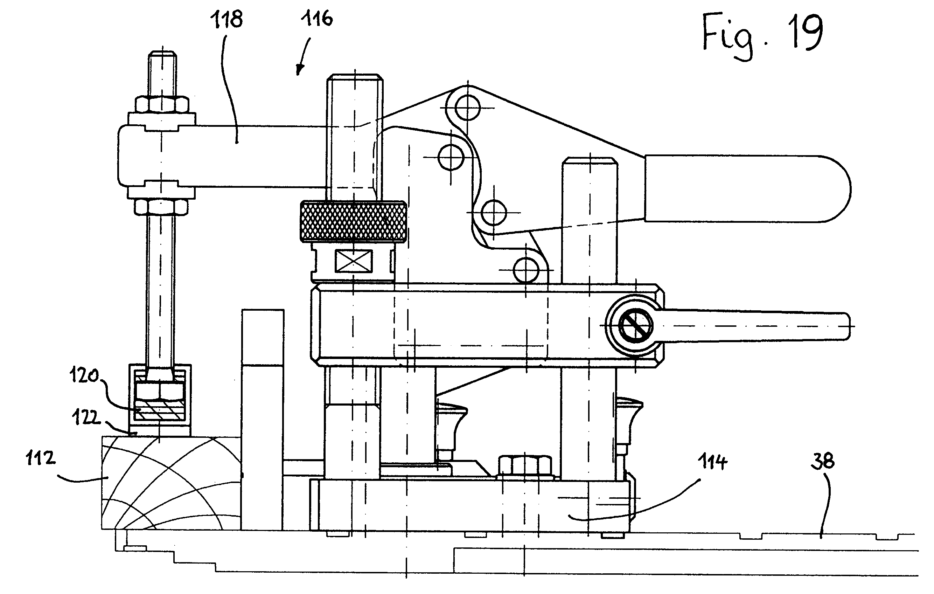

Die Figuren 18 und 19 zeigen eine Einsatzmöglichkeit der Führungsvorrichtung gemäß der Erfindung zum Einspannen eines länglichen Werkstücks 112 für die Längsbearbeitung. Zu diesem Zweck ist auf dem Aufspanntisch 38 eine Positionierplatte 114 festgeschraubt, deren der Fräswelle 12 zugewandte Längskante als Anschlagkante für das Werkstück 112 dient. Zu beiden Seiten der Positionierplatte 114 ist je ein Klemmorgan 116 auf dem Aufspanntisch 38 befestigt, dessen Klemmhebel 118 über elastische Puffer 120 auf einen Druckbalken 122 wirken, der das Werkstück 112 mit elastischer Kraft einspannt.

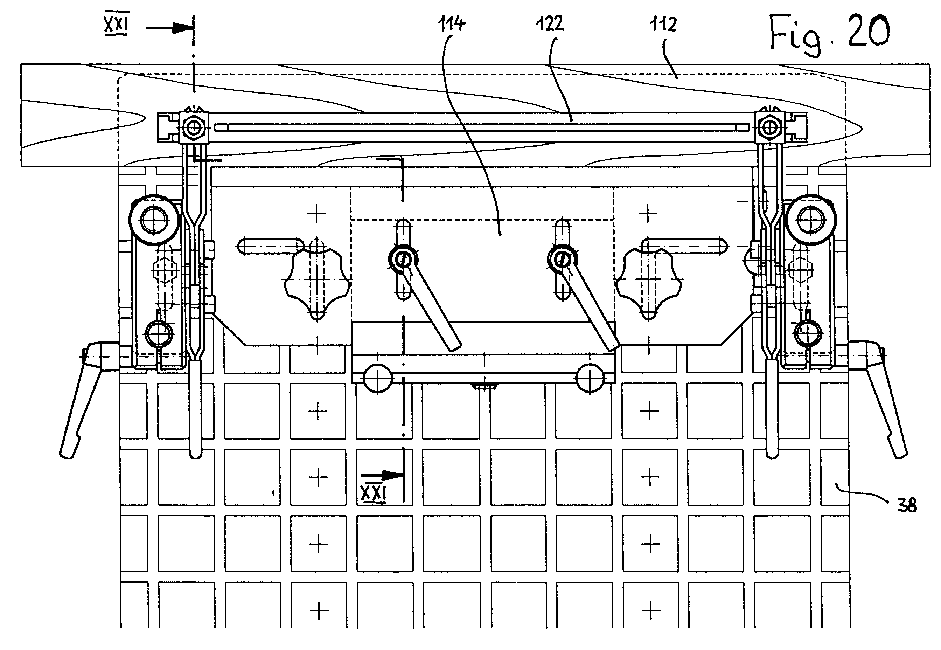

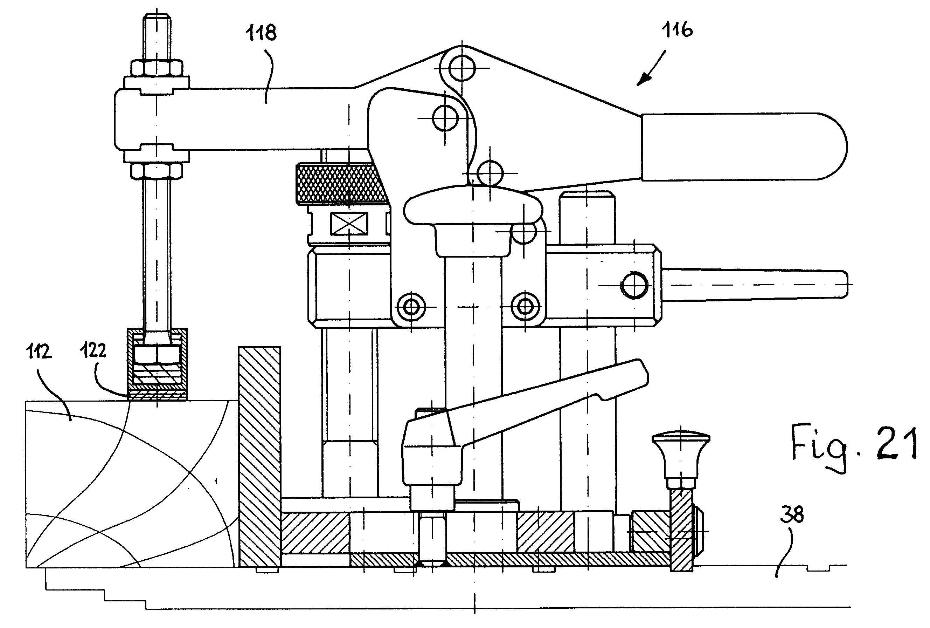

Beim Beispiel der Figuren 20 und 21 ist in ähnlicher Weise ein balkenförmiges Werkstück 112 auf dem Aufspanntisch 38 festgeklemmt.

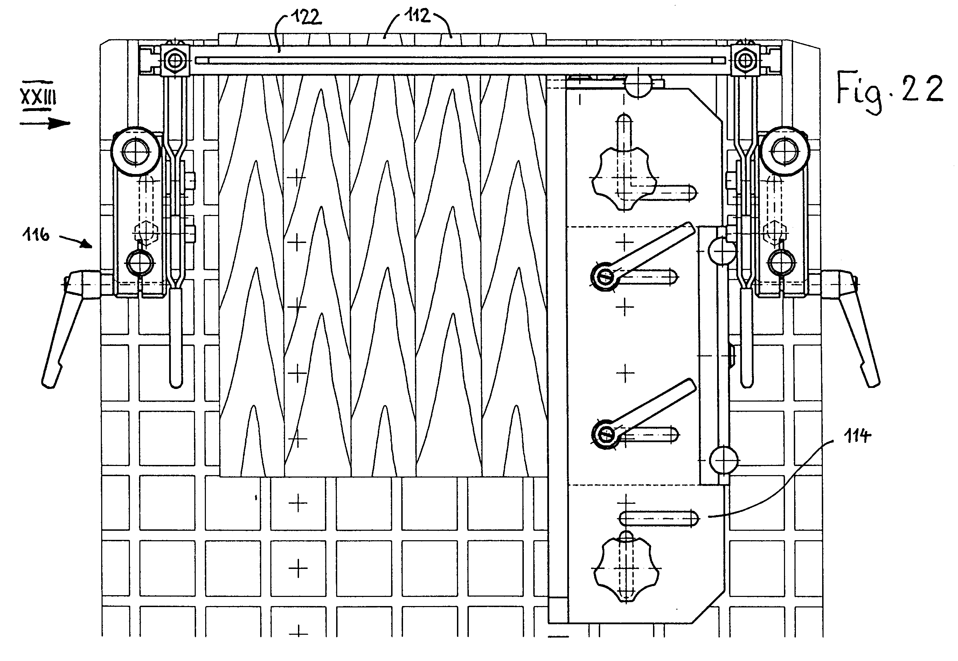

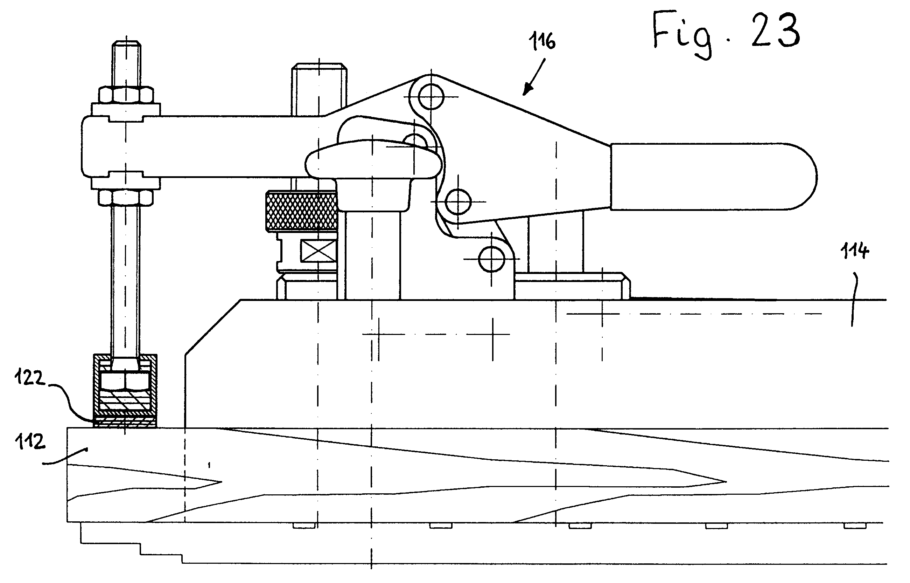

Die Figuren 22 und 23 zeigen die Möglichkeit, mit Hilfe der Klemmorgane 116 eine Gruppe von leistenförmigen Werkstücken 112 so einzuspannen, daß sie an ihrer Stirnseite bearbeitet werden können. Hierzu ist die Positionierplatte 114 gegenüber den Anwendungsfällen der Figuren 16 bis 19 um 90° gedreht auf dem Aufspanntisch 38 befestigt.

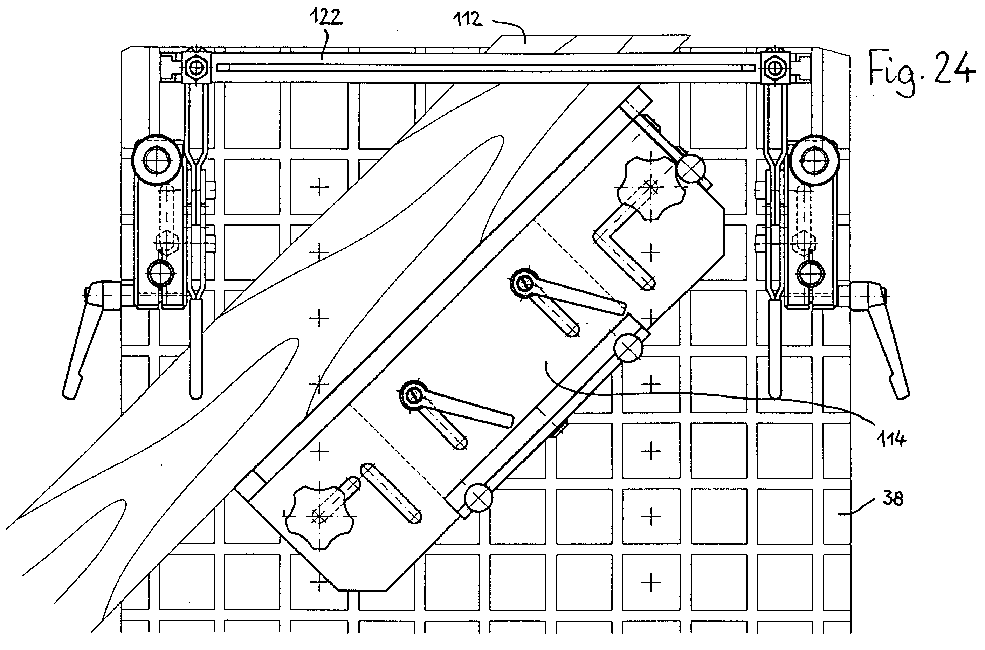

Beim Beispiel der Figur 24 ist die Positionierplatte 114 in einer beliebigen Winkellage auf dem Aufspanntisch 38 angebracht, so daß beispielsweise die Stirnseite eines Werkstücks 112 schräg gefräst werden kann.

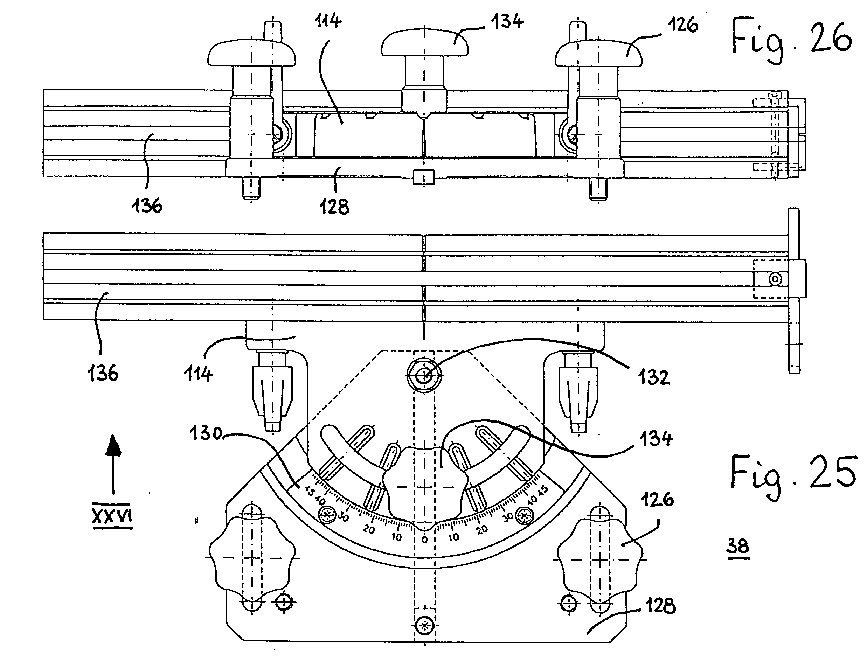

Die Figuren 25 und 26 zeigen eine Variante der Figur 24, bei der auf dem Aufspanntisch 38 mit Hilfe von zwei Sterngriff-Schrauben 126 ein Gehrungshalter 128 befestigt ist, der in bekannter Weise eine Winkelskala 130 trägt und auf dem die Positionierplatte 114 um eine vertikale Achse 132 schwenkbar gelagert ist. Zum Fixieren der eingestellten Winkellage dient ein weiterer Sterngriff 134. An der ebenen Vorderseite der Positionierplatte 114 ist eine Anschlagleiste 136 befestigt, die aus einem Aluminiumprofil besteht und an der das Werkstück positioniert werden kann.

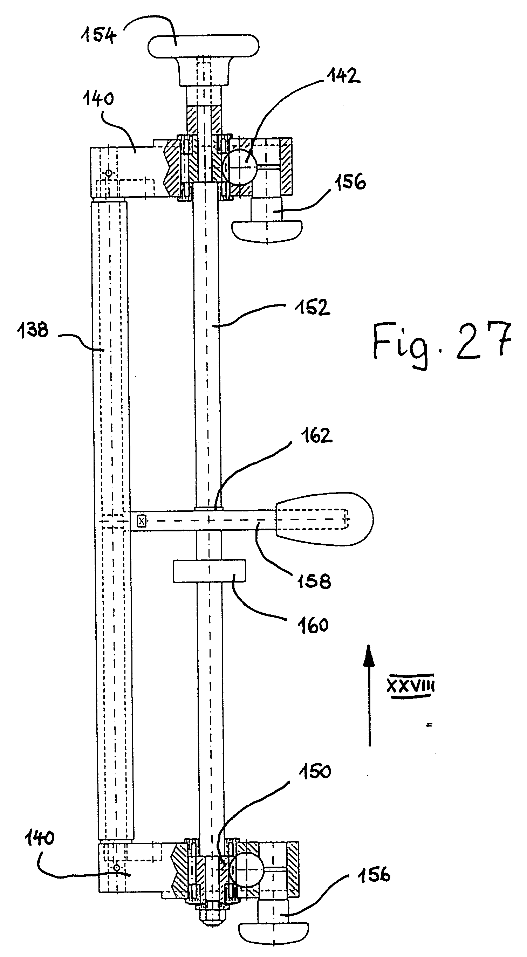

Die Figuren 27 bis 30 zeigen eine von den Figuren 18 und 19 abgewandelte Möglichkeit zur Fixierung eines Werkstücks 112 auf dem Aufspanntisch 38. Zwar wird auch hier ein Druckbalken 122 verwendet, der jedoch mit seinen beiden Enden über ein Kniehebelgelenk 138 an zwei Supporten 140 gelagert ist, die höhenverstellbar an je einer Säule 142 gelagert sind. Jede Säule 142 steht von einer Grundplatte 144 ab, die mittels Schrauben 146 auf dem Aufspanntisch 38 befestigt ist. Auf ihrer zum Fräswerkzeug gerichteten Seite hat jede Säule 142 ein Zahnstangenprofil 148, mit dem ein Zahnrad 150 kämmt, von dem eines an jedem Ende einer Welle 152 angebracht ist. Die Welle 152 kann über ein Handrad 154 gedreht werden, so daß die beiden Supporte 140 synchron zueinander in vertikaler Richtung verstellt werden können. Wenn die gewünschte Höhe erreicht ist, können beide Supporte 140 mit Hilfe von Klemmschrauben 156 auf der entsprechenden Säule 142 fixiert werden.

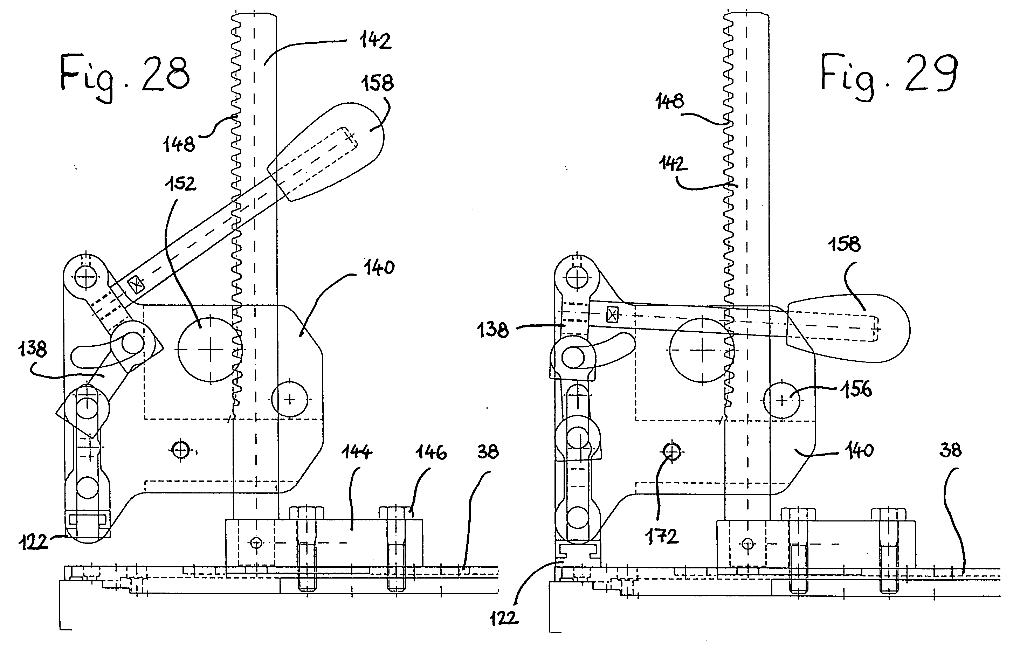

Vom obersten Element des Kniehebelgelenkes 138 steht ein Spannhebel 158 ab, mit dem das Kniehebelgelenk 138 aus seiner gelösten Stellung (Figur 28) über eine Vorspannstellung in seine Klemmstellung (Figur 29) geschwenkt werden kann.

Figur 27 zeigt, daß auf der Welle 152 ein Anschlagring 160 axial beweglich gelagert ist. In der Vorspannstellung befindet sich der Anschlagring 160 vertikal unter dem Spannhebel 158, wobei er an einem axialen Anschlag 162 der Welle 152 anliegt.

Zum Festklemmen eines Werkstücks wird dieses zunächst unter den Druckbalken 122 gelegt, worauf dieser mittels der beiden Supporte 140 abgesenkt wird; der Anschlagring 160 ist in dieser Phase unter den Spannhebel 158 geschoben, der das Kniehebelgelenk 138 in seine Vorspannstellung gebracht hat, in der er auf dem Anschlagring 160 aufliegt. Wenn der Druckbalken 122 auf dem Werkstück aufliegt, werden in der erläuterten Vorspannstellung die beiden Supporte 140 mit Hilfe der Klemmschrauben 156 auf den Säulen 142 blockiert. Danach wird der Anschlagring 160 aus dem Schwenkbereich des Spannhebels 158 axial herausgeschoben (vgl. Figur 27), so daß der Spannhebel 158 bis gegen die Welle 152 niedergedrückt werden kann, um auf diese Weise das Kniehebelgelenk 138 in seine Schwenkstellung zu schwenken.

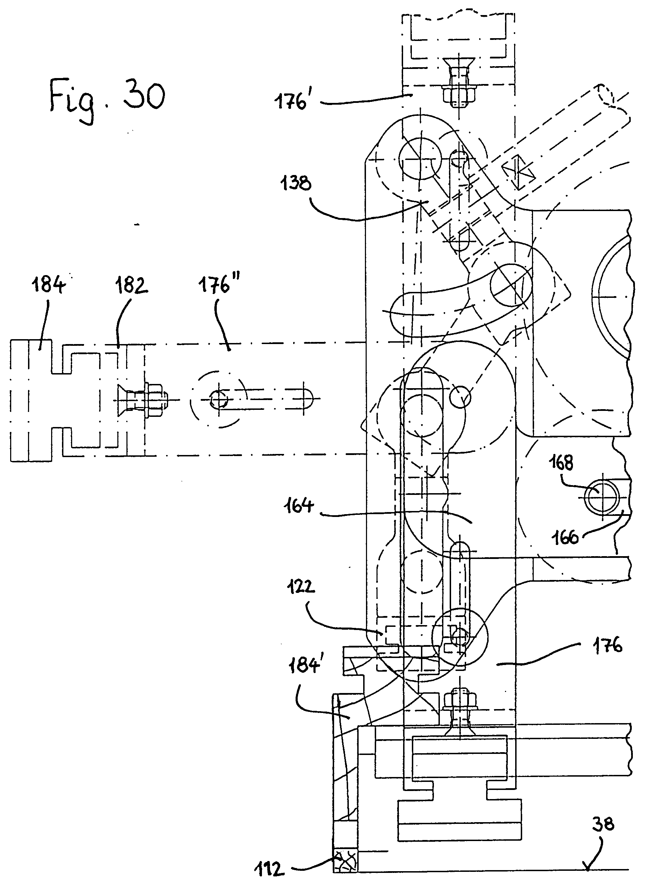

In Figur 30 ist angedeutet, daß an jedem Support 140 ein L-förmiger Tragarm 164 befestigt werden kann, dessen längerer Schenkel ein Langloch 166 hat, durch welches der Gewindeschaft 168 einer Klemmschraube 170 greift; der Gewindeschaft 168 ist in eine Gewindebohrung 172 des Supports 140 eingeschraubt. Über das Langloch 166 kann der Tragarm 164 in horizontaler Richtung auf dem Support 140 verstellt werden.

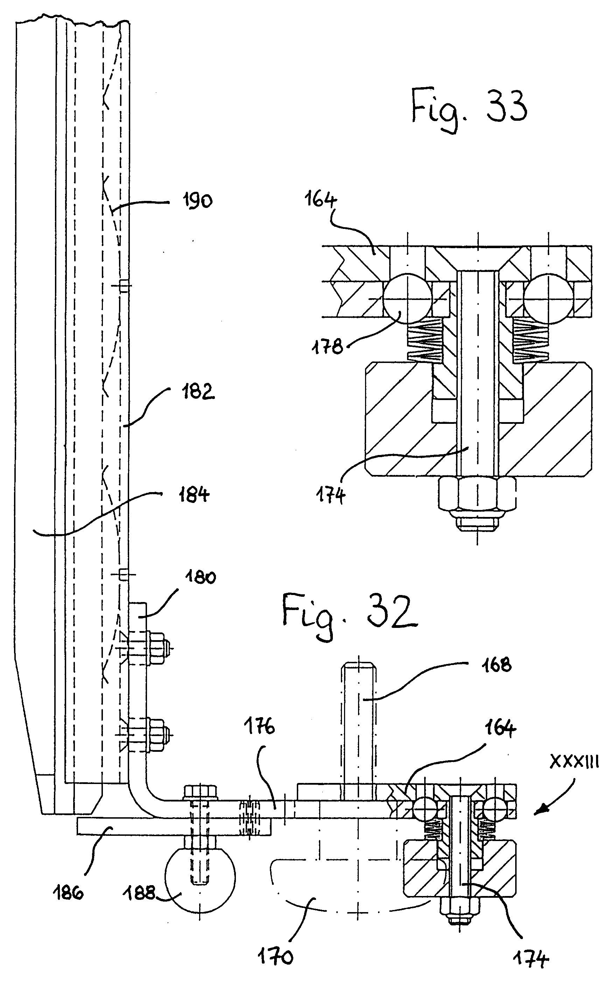

An dem zum Fräswerkzeug weisenden Ende jedes der beiden Tragarme 164 ist um eine horizontale Achse 174 schwenkbar eine Lasche 176 gelagert, die in drei um 90° voneinander beabstandeten Winkellagen mit Hilfe von federbelasteten Kugeln 178 an dem Tragarm 164 verrastet werden kann. Die zum Fräswerkzeug weisenden Enden 180 der beiden Laschen 176 sind so abgewinkelt, daß sie fluchtend einander gegenüberliegen. An diesen beiden Enden 180 ist, wie Figur 32 zeigt, eine Führungsschiene 182 befestigt, die im Querschnitt ein C-förmiges Profil hat und in die eine Andruckleiste 184 eingeschoben ist. Die axiale Stellung der Andruckleiste 184 in der Führungsschiene 182 wird durch zwei Finger 186 gesichert, die über jeweils eine Schraube 188 festgeklemmt bzw. gelöst werden können, um bei Bedarf die Andruckleiste 184 herauszuziehen und durch eine andere Andruckleiste zu ersetzen. Innerhalb des C-förmigen Profils der Führungsschiene 182 wird die Andruckleiste 184 durch als Blattfedern ausgebildete Druckfedern 190 in Richtung auf ein festzuklemmendes Werkstück beaufschlagt.

Figur 30 zeigt die Andruckleiste 184 in ihren drei Positionen. Wenn die beiden Laschen 176' nach oben weisen, befindet sich die Andruckleiste 184 in Ruhestellung, während sie in der um 180° nach unten gedrehten Stellung auf ein Werkstück drückt, das zwischen dem Druckschuh 84 an der Vorderseite des Aufspanntisches 38 und dem Fräsanschlag durchgeschoben wird; hierbei handelt es sich in aller Regel um lange Leisten, die gefräst werden sollen.

Die mit 176'' gestrichelt eingezeichnete Stellung der beiden Laschen 176 ist eine Sonderstellung, in der die Andruckleiste 184 ein hochkant stehendes Brett beim Fräsen am Anschlag gegen Kippen sichern soll.

Der Aufspanntisch 38 eignet sich in hervorragender Weise zum Anbau - nachträglich oder bei Bedarf - auf dem Maschinentisch 10 einer Fräsmaschine. Um einen raschen Aufbau und Abbau zu gewährleisten, können auf dem Aufspanntisch 38 Mittel - beispielsweise Gewindebohrungen - vorgesehen sein, um für die Zeit des Umbaus einen Greifadapter zu befestigen, der von einem horizontalen Arm einer Ausschwenkeinrichtung absteht. Über diese Ausschwenkeinrichtung kann die gesamte Vorrichtung mühelos und sehr rasch bewegt werden.

Aus den angedeuteten Einsatzbeispielen ist zu erkennen, daß die Führungsvorrichtung gemäß der Erfindung in vielfältiger Weise zur Holzbearbeitung an Tischfräsmaschinen angewendet werden kann:
- Fräsen langer, leistenförmiger Werkstücke am Anschlag, wobei der Druckschuh 84 den nötigen Andruck gegen den Anschlag ausübt,
- Fräsen kurzer Werkstücke, die durch die Klemmorgane 116 in Längsrichtung oder in Querrichtung oder unter einem beliebigen Winkel auf dem Aufspanntisch 38 aufgespannt sind,
- Fräsen geschweifter Werkstücke mittels Schablone 100,
- Einsetzfräsen kurzer Werkstücke,
- Einsetzfräsen mit Hilfe einer Spannlade,
- Formfräsen mit Hilfe einer Schrittdrehvorrichtung, die das zu fräsende Werkstück, beispielsweise ein Stuhlbein oder eine Geländerpfosten, aufnimmt.

## Patentansprüche

1. Vorrichtung für geführtes Fräsen von Werkstücken an Fräsmaschinen mit einem Maschinentisch (10), über den das Fräswerkzeug (12) nach oben herausragt, mit einem das Werkstück (112) aufnehmenden oder erfassenden Aufspanntisch (38), der relativ zu dem Maschinentisch (10) horizontal verfahrbar ist, und mit einer Läuferplatte (24), auf der der Aufspanntisch (38) über Führungen verfahrbar gelagert ist und die ihrerseits in der dazu rechtwinkligen Richtung relativ zum Maschinentisch (10) verfahrbar gelagert ist, **dadurch gekennzeichnet**, daß die Läuferplatte (24) über teleskopierbare Längsführungen (22) in x-Richtung verfahrbar auf einer Grundplatte (18) gelagert ist, die auf dem Maschinentisch (10) fixierbar ist, daß der Aufspanntisch (38) über teleskopierbare Querführungen (36) in y-Richtung verfahrbar ist und daß in der dem Fräswerkzeug (12) zugewandten Längsseite des Aufspanntisches (38) ein in Richtung auf das Fräswerkzeug (12) federbelasteter Druckschuh (84) angebracht ist.

2. Vorrichtung nach Anspruch 1, **dadurch gekennzeichnet**, daß die dem Fräswerkzeug (12) zugewandte Längsseite des Aufspanntisches (38) am zuführseitigen Ende einen über die Längsseite ausrückbaren und gegen eine Federkraft (Druckfeder 96) einrückbaren Mitnahmenocken (92) aufweist.

3. Vorrichtung nach Anspruch 2, **dadurch gekennzeichnet**, daß der Mitnahmenocken (92) arretierbar ist.

4. Vorrichtung nach einem der vorhergehenden Ansprüche, **dadurch gekennzeichnet**, daß auf dem Aufspanntisch (38) Klemmorgane (116) zum Festklemmen des zu bearbeitenden Werkstückes (112) fixierbar sind.

5. Vorrichtung nach Anspruch 4, **dadurch gekennzeichnet**, daß die Klemmorgane (116) einen das Werkstück (112) elastisch spannenden Druckbalken (122) aufweisen.

6. Vorrichtung nach Anspruch 5, **dadurch gekennzeichnet**, daß der Druckbalken (122) mit seinen beiden Enden über ein Kniehebelgelenk (138) an einem Support (140) gelagert ist, der höhenverstellbar an einer Säule (142) gelagert ist.

7. Vorrichtung nach Anspruch 6, **dadurch gekennzeichnet**, daß von dem Kniehebelgelenk (138) ein Spannhebel (158) absteht, der aus einer Vorspannstellung, in der er an einem Anschlagring (160) anliegt, der verschiebbar auf einer beide Supporte (140) verbindenden Welle (152) sitzt, in eine Klemmstellung schwenkbar ist, in der er an der Welle (152) anliegt.

8. Vorrichtung nach einem der vorhergehenden Ansprüche, **dadurch gekennzeichnet**, daß vor der dem Fräswerkzeug (12) zugewandten Längsseite des Aufspanntisches (38) eine von oben gegen das Werkstück wirkende Andruckleiste (184) vorgesehen ist.

9. Vorrichtung nach Anspruch 8, **dadurch gekennzeichnet**, daß die Andruckleiste (184) auswechselbar in eine Führungsschiene (182) eingeschoben ist, in der die Andruckleiste (184) an Druckfedern (190) anliegt.

10. Vorrichtung nach Anspruch 9, **dadurch gekennzeichnet**, daß beide Enden der Führungsschiene (182) an je einer Lasche (176) befestigt sind, die in wenigstens drei Winkellagen an einem horizontalen Tragarm (164) verrastbar ist.

11. Vorrichtung nach Anspruch 6 und 10, **dadurch gekennzeichnet**, daß die beiden Tragarme (164) horizontal verstellbar an den beiden Supporten (140) befestigt sind.

12. Vorrichtung nach einem der vorhergehenden Ansprüche, **dadurch gekennzeichnet**, daß auf dem Aufspanntisch (38) eine Positionierplatte (114) für das zu bearbeitende Werkstück (112) in beliebiger Winkellage fixierbar ist.

13. Vorrichtung nach Anspruch 12, **dadurch gekennzeichnet**, daß die Positionierplatte (114) um eine vertikale Achse (132) schwenkbar auf einem Gehrungshalter (128) gelagert ist und eine Anschlagleiste (136) für das Werkstück trägt.

14. Vorrichtung nach einem der vorhergehenden Ansprüche, **dadurch gekennzeichnet**, daß der Aufspanntisch (38) auf der Läuferplatte (24) verriegelbar ist.

15. Vorrichtung nach einem der vorhergehenden Ansprüche, **dadurch gekennzeichnet**, daß der Aufspanntisch (38) auf der vom Fräswerkzeug abgewandten Seite einen Handgriff (40) aufweist.

16. Vorrichtung nach Anspruch 15, **dadurch gekennzeichnet**, daß im Bereich des Handgriffes (40) ein Betätigungshebel (50) für die Entriegelung des Aufspanntisches (38) von der Läuferplatte (24) angebracht ist.

17. Vorrichtung nach einem der vorhergehenden Ansprüche, **dadurch gekennzeichnet**, daß die Läuferplatte (24) auf der Grundplatte (18) verriegelbar ist.

18. Vorrichtung nach einem der vorhergehenden Ansprüche, **dadurch gekennzeichnet**, daß zur Begrenzung der Längsbewegung der Läuferplatte (24) an der vom Fräswerkzeug abgewandten Längskante (26) der Grundplatte (18) verstellbare Anschläge (28) angebracht sind, denen Gegenanschläge (32) auf der Läuferplatte (24) entsprechen.

19. Vorrichtung nach Anspruch 18, **dadurch gekennzeichnet**, daß die Gegenanschläge (32) aus dem Eingriffsbereich mit den Anschlägen (28) ausrückbar sind.

20. Vorrichtung nach einem der vorhergehenden Ansprüche, **dadurch gekennzeichnet**, daß an der vom Fräswerkzeug abgewandten Längskante des Aufspanntisches (38) eine Frässchablone (100) angebracht ist, die an einer Tastrolle (102) anliegt.

21. Vorrichtung nach Anspruch 20, **dadurch gekennzeichnet**, daß die Tastrolle (102) verstellbar am Maschinentisch (10) befestigt ist.

22. Vorrichtung nach einem der vorhergehenden Ansprüche, **dadurch gekennzeichnet**, daß zwischen dem Aufspanntisch (38) und der Läuferplatte (24) eine den Aufspanntisch (38) vom Fräswerkzeug abrückende Rückzugeinrichtung (58) angebracht ist.

23. Vorrichtung nach Anspruch 22, **dadurch gekennzeichnet**, daß die Rückzugeinrichtung (58) eine Triebfeder (60) aufweist, die im Inneren einer an der Läuferplatte (24) gelagerten Trommel (66) angreift, auf die ein Zugseil (70) gewickelt ist, dessen freies Ende am Aufspanntisch (38) befestigt ist.

24. Vorrichtung nach einem der vorhergehenden Ansprüche, **dadurch gekennzeichnet**, daß auf dem Aufspanntisch (38) eine Schrittdrehvorrichtung für die Aufnahme des Werkstücks (112) fixierbar ist.

25. Vorrichtung anch einem der vorhergehenden Ansprüche, **dadurch gekennzeichnet**, daß der Aufspanntisch (31) Mittel zur Befestigung eines Greifadapters einer Ausschwenkeinrichtung aufweist.

## Claims

1. Device for guided milling of workpieces in milling machines comprising a table (10) above which a cutter head (12) projects, a mounting table (38) supporting or grasping the workpiece (112) and horizontally slidable on the table (10), and a shifting table (24) on which said mounting table (38) is slidably supported by means of guides and which is mounted in relation to the table (10) for rectilinear sliding movement, characterised in that the shifting table (24) is slidably mounted along the X-direction by means of telescopic longitudinal guides (24) on a base plate (18) adapted to be fixed on the table (10), that said mounting table (38) is slidably mounted along the Y-direction by means of telescopic transversal guides (36), and that in the longitudinal edge of the mounting table (38) facing said cutter head (12) a pressure shoe (84) is mounted which is spring-loaded towards the cutter head (12).

2. Device according to claim 1, wherein said longitudinal edge of the mounting table (38) facing the cutter head (12) is provided, at its feeding end, with a catching nose (92) to be projected over said longitudinal edge and adapted to be retracted against the elastic force of a pressure spring (96).

3. Device according to claim 2, wherein said catching nose (92) may be locked.

4. Device according to any of the preceding claims, wherein gripping means (116) for clamping the workpiece (11) to be machined may be fastened on the mounting table (38).

5. Device according to claim 4, wherein said clamping means (116) comprise a pressure beam (112) adapted to elastically chuck the workpiece (112).

6. Device according to claim 5, wherein both ends of the pressure beam (116) are mounted by means of a toggle joint (138) on a support (140) vertically adjustable mounted on a column (142).

7. Device according to claim 6, wherein from said toggle joint (138) a clamping lever (158) projects which may be turned from a preloaded position, in which it contacts a stop ring (160) slidably mounted on a spindle (152) linking both supports (140), into a clamping position in which it contacts the spindle (152)

8. Device according to any of the preceding claims, wherein a pressure bar (184) is positioned in front of the longitudinal edge of said mounting table (38) facing the cutter head (12), said pressure bar (184) acting from above onto the workpiece.

9. Device according to claim 8, wherein the pressure bar (184) is removably inserted into a guide rail (182) such that it is resting on compression springs (190).

10. Device according to claim 9, wherein both ends of the guide rail (182) are fixed on a corresponding bracket (176) that may be locked on a horizontal supporting arm (164) in at least three different angular positions.

11. Device according to claims 6 and 10, wherein both supporting arms (164) are horizontally adjustable fastened on the supports (140).

12. Device according to any of the preceding claims, wherein on the mounting table (38) a positioning plate (114) for the workpiece (112) may be fastened in any angular position.

13. Device according to claim 12, wherein the positioning plate (114) is mounted on a mitre support (128) such that it may rotate about a vertical axis (132), said positioning plate (114) bearing a stop strip (136) for the workpiece.

14. Device according to any of the preceding claims, wherein the mounting table (38) may be locked on the shifting table (24).

15. Device according to anyone of the preceding claims, wherein the mounting table (38) is provided, distant from the cutter head (12), with a handle (40).

16. Device according to claim 15, wherein in the zone of the handle (40) an operating lever (50) is provided for releasing the mounting plate (38) from the shifting table (24).

17. Device according to any of the preceding claims, wherein the shifting plate (24) may be locked on the base plate (18).

18. Device according to anyone of the preceding claims, wherein on the longitudinal edge (26) of the base plate (18) distant from the cutter head are adjustably fastened stop elements (28) for limiting the longitudinal movement of the shifting table (24), said stop elements (28) are cooperating with counterstops (32) provided on the shifting table (24).

19. Device according to claim 18, wherein the counterstops (32) may be retracted from the engagement zone of the stop elements (28).

20. Device according to anyone of the preceding claims, wherein to the longitudinal edge of the mounting table (38) distant from the cutter head a milling template (100) is fastened that contacts a sensing roller (102).

21. Device according to claim 20, wherein the sensing roller (102) is adjustably fastened on the table (10).

22. Device according to anyone of the preceding claims, wherein between the mounting table (38) and the shifting table (24) a rectracting device (58) is mounted adapted to move the mounting table (38) off the cutter head.

23. Device according to claim 22, wherein the retracting device (58) is provided with a motive spring (60) applied to the inner side of a cylinder (66) mounted on the shifting table (24), a traction cable (70) being wound on said cylinder (66) the free end of which is fixed to the mounting table (38).

24. Device according to any of the preceding claims, wherein on the mounting table (38) may be fixed an intermittent rotary means supporting the workpiece (112).

25. Device according to any of the preceding claims, wherein the mounting table (38) is provided with means for fastening a adapter head for fixing a swing out device.

## Revendications

1. Dispositif pour le fraisage guidé de pièces à travailler sur des toupies, comprenant une table de machine (10) au-dessus de laquelle s'élève l'outil à fraiser (12), une table de fixation (38) pour recevoir ou saisir la pièce (112), ladite table de fixation (38) étant horizontalement déplaçable par rapport à la table de machine (10), et une table de translation (24) sur laquelle la table de fixation (38) est montée de manière deplaçable par l'intermédiaire de guides et qui elle-même est montée de manière déplaçable dans le sens rectangulaire par rapport à la table de machine (10), caractérisé par le fait que la table de translation (24) est montée sur une plaque de base (18) déplaçable dans la direction X au moyen de guides longitudinaux télescopiques (22), ladite plaque de base (18) pouvant être fixée à la table de machine (10), par le fait que la table de fixation (38) est déplaçable dans la direction Y au moyen de guides transversaux télescopiques (36) et par le fait que dans la face longitudinale de la table de fixation (38) faisant face à l'outil à fraiser (12) est appliqué un patin de pression (84) chargé par un ressort vers l'outil à fraiser (12).

2. Dispositif selon la revendication 1, caractérisé par le fait que la face longitudinale de la table de fixation (38) faisant face à l'outil à fraiser (12) présente, à l'extremité d'alimentation, une came d'entraînement (92) apte à être poussée hors de la face longitudinale et à être rétractée contre une force élastique (ressort de pression 96).

3. Dispositif selon la revendication 2, caractérisé per le fait que la came d'entraînement (92) est apte à être bloquée.

4. Dispositif selon une quelconque des revendications précédentes, caratérisé per le fait que sur la table de fixation (38) des organes de serrage (116) peuvent être fixés pour serrer la pièce à travailler (112).

5. Dispositif selon la revendication 4, caractérisé per le fait que les organes de serrage (116) présentent une barre de pression (122) pour serrer la pièce (112) de façon élastique.

6. Dispositif selon la revendication 5, caractérisé per le fait que la barre de pression (122) est logée par ses deux extrémités par l'intermédiare d'une articulation de grenoullère (138) à un support (140) pouvant se déplacer verticalement sur une colonne (142).

7. Dispositif selon la revendication 6, caratérisé par le fait que à partir de l'articulation à genouillère (138) fait saillie un levier de serrage (158) lequel, à partir de sa position de préserrage, dans laquelle il vient en contact avec une bague de butée (160) elle-même montée de manière déplaçable sur un axe (152) reliant les deux supports (140), est pivotable dans une position de serrage dans laquelle il vient en contact avec l'axe (152).

8. Dispositif selon l'une des revendications précédentes, caractérisé par le fait que devant la face longitudinale de la table de fixation (38) faisant face à l'outil (12), il est prévu une barre de pression (184) appuyant sur la pièce par le dessus.

9. Dispositif selon la revendication 8, caractérisé par le fait que la barre de pression (184) vient se loger de façon détachable dans un rail de guidage (182) dans lequel la barre de pression (184) s'applique sur des ressorts de pression (190).

10. Dispositif selon la revendication 9, caratérisé par le fait que les deux extrémités du rail de guidage (182) sont fixées chacune à une attache (176) possedant au moins trois crans d'arrêt de pivotement sur un bras-support horizontal (164).

11. Dispositif selon les revendications 6 et 10, caratérisé par le fait que les deux bras-supports (164) sont fixés de manière à être déplaçables horizontalement sur les deux supports (140).

12. Dispositif selon l'une des revendications précédentes, caractérisé par le fait que, sur la table de fixation (38), une plaque de positionnement (114) pour la pièce à travailler (112) est fixable dans n'importe quelle position.

13. Dispositif selon la revendication 12, caractérisé par le fait que la plaque de positionnement (114) est montée de façon pivotable autour d'un axe vertical (132) sur un support à onglet (128) et porte une barrette de butée (136) pour la pièce.

14. Dispositif selon l'une des revendications précédentes, caratérisé par le fait que la table de fixation (38) est verrouillable sur la table de translation (24).

15. Dispositif selon l'une des revendications précédentes, caratérisé par le fait que la table de fixation (38) présente sur sa face éloignée de l'outil une poignée (40).

16. Dispositif selon la revendication 15, caratérisé par le fait que dans la zone de la poignée (40) est placé un levier (50) pour déverrouiller la table de fixation (38) de la table de translation (24).

17. Dispositif selon l'une des revendications précédentes, caratérisé par le fait que la table de translation (24) est verrouillable sur la plaque de base (18).

18. Dispositif selon l'une des revendications précédentes, caratérisé par le fait que, pour la limitation du mouvement longitudinal de la table de translation (24) sont fixés, sur le bord longitudinal (26) de la plaque de base (18) le plus éloigné de l'outil, des butées réglables (28) auxquelles correspondent des contre-butées (32) sur la table de translation (24).

19. Dispositif selon la revendication 18, caratérisé par le fait que les contre-butées (32) sont déplaçables hors de la zone d'action des butées (28).

20. Dispositif selon l'une des revendications précédentes, caratérisé par le fait que, sur le bord de la table de translation (38) éloigné de l'outil, est monté un gabarit de fraisage (100) qui est appliqué contre un galet palpeur (102).

21. Dispositif selon la revendication 20, caratérisé par le fait que le galet palpeur (102) est fixé de façon réglable sur la table de machine (10).

22. Dispositif selon l'une des revendications précédentes, caratérisé par le fait qu'entre la table de fixation (38) et la table de translation (24) est monté un dispositif de traction en arrière (58) éloignant la table de fixation (38) de l'outil.

23. Dispositif selon la revendication 22, caratérisé par le fait que le dispositif de traction en arrière (58) présente un ressort moteur (60) accroché à l'intérieur d'un tambour (66) fixé sur la table de translation (24), sur ledit tambour étant enroulé un cordon de traction (70) dont de bout libre est fixé à la table de fixation (38).

24. Dispositif selon l'une des revendications précédentes, caratérisé par le fait que sur la table de fixation (38) on peut fixer un dispositif de rotation en pas à pas pour recevoir la pièce à travailler (112).

25. Dispositif selon l'une des revendications précédentes, caratérisé par le fait que la table de fixation (38) présente des moyens de fixation pour un adaptateur de saisie d'un système pivotant.
